# EUROPEAN PATENT APPLICATION

(11) **EP 1 031 717 A2**
(43) Date of publication of application: **30.08.2000**
(21) Application number: 00301186.3
(22) Date of filing: 16.02.2000
(51) Int. Cl.: F02C 7/32, F02C 7/36, F01D 15/10

(54) **Gas turbine engine**

(30) Priority: 25.02.1999 GB 9904277
(71) Applicant: ROLLS-ROYCE PLC, London, SW1E 6AT (GB)
(72) Inventor: Care, Ian Colin Deuchar, Littleover, Derby DE23 6EU (GB); Newton, Arnold Charles, Ockbrook, Derby DE72 3RF (GB)
(74) Representative: Gunn, Michael Alan

(57) **Abstract**

The engine 110 is a multiple shaft ducted fan by-pass type gas turbine engine. An electrical generator 150 is driven by the low pressure shaft 116. An electrical motor 152 is driven by power generated by the generator 150. This is shown as being external to the engine. The generator 150 and motor 152 are connected, in use, by an uninterrupted electrical conductor arrangement 156. The motor 152 may drive hydraulic pumps or other systems. Thus, power is taken off the engine in purely electrical form with significant consequential advantages in weight reduction, simplicity and reliability.

## Description

This invention relates to gas turbine engines and in particular, to drive arrangements for driving systems within or external to the engine.

Gas turbine engines are used as aircraft engines and for other purposes, as noted below. In addition to providing propulsive thrust for an aircraft, gas turbine aircraft engines are required to provide electrical and hydraulic power for accessories on the engine and on the aircraft upon which the engine is operationally mounted.

The conventional way of extracting electrical and hydraulic power from a gas turbine engine is to provide a direct mechanical drive from a compressor shaft of the engine to a suitable reduction gearbox. The gearbox is usually mounted on the fan casing of the engine or on the engine core. In either arrangement, an electrical generator, hydraulic pump and fuel pump are conventionally situated adjacent the gearbox, to be driven thereby.

The presence of these components adds weight to the engine. In addition, the additional structures must be accommodated within the engine architecture without adversely affecting engine operation. The need to provide lubrication to the components and to protect the lubrication medium and the components from the heat of the engine environment impose additional design criteria over and above the requirements for successful operation of the engine itself. Arrangements must also be provided to control or avoid contamination between liquid components.

The invention seeks to obviate or mitigate these or other disadvantages of the prior art.

In accordance with the invention, there is provided a gas turbine engine arrangement comprising at least one driven shaft within the engine, electrical generator means driven by the said shaft which in use generates electrical power, and electrical motor means driven by the electrical power generated by the generator means, the motor means being located remotely from the generator means; characterised in that the generator means and the motor means are connected, in use, by uninterrupted electrical conductor means and that the motor means are operable to provide power to a hydraulic system.

Preferably the uninterrupted electrical conductor means provide a direct electrical connection between windings of the generator means and of the motor means. The generator means may comprise a permanent magnet generator, a switched reluctance generator or an induction coil generator. The motor means may comprise a permanent magnet motor or an induction motor. The engine arrangement may further comprise a control arrangement operable to change the number of poles operating within the motor means and/or the generator means, whereby the ratio of speeds of the motor means and the generator means can be varied. The motor means and/or the generator means preferably comprise multiple independent windings. The motor means and the generator means preferably each comprise a like multiplicity of independent windings, the electrical conductor means providing a like multiplicity of independent uninterrupted electrical connections between corresponding windings of the generator means and of the motor means.

The generator means is preferably driven directly from the engine shaft. The engine is preferably a multiple shaft engine, such as a three shaft engine comprising a high pressure shaft, an intermediate pressure shaft, and a low pressure shaft, with the generator means being driven preferably by the low pressure shaft or by the intermediate pressure shaft. The generator means may be located at any position along, within, around or offset from the shaft.

The motor means is preferably operable to drive a hydraulic pump within the hydraulic system.

A gearbox may be provided between the engine and the generator means and/or between the motor means and the system driven by the motor means. The gearbox may be a single speed, multiple speed or variable speed gearbox.

The generator means may further provide electrical power to at least one electrical system. The generator means may be provided with power connections by means of which the generator means may be driven as a motor operable to start the engine, in particular when connected to drive the high pressure shaft.

The motor means is preferably located remotely from the engine. The motor means may be arranged to drive a system external to the engine.

In accordance with the invention there is also provided an aircraft comprising a first wing, a second wing, a fuselage, and a plurality of engines, the engines are mounted upon said first and second wings and there are a plurality of hydraulic pumps wherein the motor means of each engine provides power to an individual hydraulic pump of the plurality of hydraulic pumps.

Preferably a common connecting hydraulic circuit leg is provided which is common to and connects the plurality of hydraulic pumps. The motor means of the plurality of engines may be operable to drive hydraulic pump means at a common location. The individual motor means of the plurality of engines may comprise a single motor means which is driven by electrical power generated by the individual generator means of the plurality of engines. Preferably the motor means are located within the fuselage.

The hydraulic pump means may provide power, in use, to a hydraulic circuit which includes a circuit leg within the fuselage and a circuit leg connecting the hydraulic pump with the hydraulic circuit within the fuselage.

The motor means may be operable to drive hydraulic pump means located within the aircraft fuselage to provide power to a hydraulic circuit which is wholly contained within the fuselage.

Preferably the generator means is operable to provide electrical power for systems within the wing and extend to the engine.

Preferably at least one engine has motor means located within the aircraft, there being at least one other engine which provides electrical power for aircraft systems. The said other engine may be operable to provide electrical power to power conditioning means which condition the power to supply at least one electrical distribution bus. The power conditioning means may be located within the pylon or wing.

The aircraft may incorporate a hydraulic circuit which comprises at least two separate hydraulic circuits located in and supplying different parts of the aircraft, the plurality of motor means and hydraulic pumps being arranged such that each of the at least two circuits includes a hydraulic pump and motor means, the hydraulic pump and motor means of a first circuit are located in a part of the aircraft corresponding to the first hydraulic circuit whilst the hydraulic pump and motor means of a second hydraulic circuit are located in a part of the aircraft corresponding to the second hydraulic circuit, the electrical conductor means connecting the generator means of the engines to the motor means extending around the aircraft to the motor means located in the different parts of the aircraft. The second circuit is preferably located within the tail part of the aircraft.

Embodiments of the present invention will now be described in more detail, by way of example only, and with reference to the accompanying drawings, in which:
Fig. 1 is a simplified section through a conventional gas turbine engine;
Fig. 2 is a schematic section through an engine arrangement according to the present invention;
Fig. 3 is a block schematic of the generator, motor and connecting arrangements of Fig. 2; and
Figs. 4 to 8 are highly schematic layouts of various alternative embodiments of the invention.

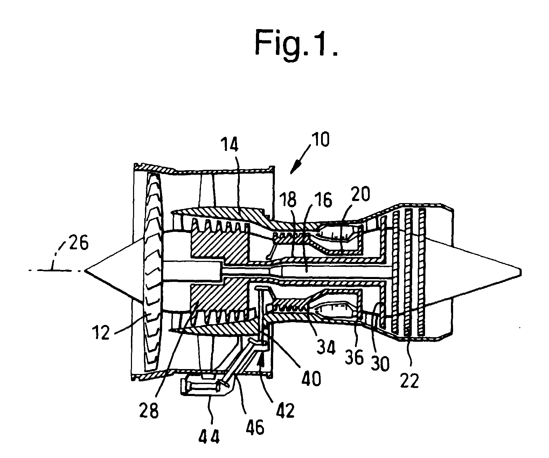

Turning to the drawings, Fig. 1 shows a conventional gas turbine engine 10. The engine 10 comprises a front fan assembly 12 and a core engine 14. The engine is of the ducted fan by-pass type and has three relatively rotatable shafts including a low pressure shaft 16, an intermediate pressure shaft 18 and a high pressure shaft 20. The low pressure shaft 16 is a load transmitting shaft interconnecting the fan 12, and a turbine assembly 22 located at the downstream end of the core engine 14. The shaft 16 is rotatable about the axis 26 of the engine. The intermediate pressure shaft 18 is a hollow load transmitting shaft concentrically disposed around the shaft 16 and interconnecting a multi-stage axial flow compressor 28 and a turbine rotor assembly 30. The high pressure shaft 20 is similarly a hollow load transmitting shaft concentric with the shafts 16 and 18, and interconnecting a multi-stage axial flow compressor 34 and a turbine rotor assembly 36.

The engine 10 further includes a radial power off-take shaft 40, a gearbox 42 drivingly connected to the high pressure shaft 20 by the drive shaft 40, an externally mounted accessory gearbox 44 and a drive shaft 46 connecting the accessory gearbox 44 to the gearbox 42. Various engine accessories and aircraft accessories (not shown) are mounted on the accessory gearbox 44 so as to be driven by the transmission during engine operation. These accessories will typically include hydraulic pumps for proving hydraulic power within the engine and elsewhere in the aircraft, fuel pumps, and alternators for providing electrical power within the engine or elsewhere in the aircraft.

All these components are accommodated within the engine, adding significantly to engine weight and complexity, and representing an additional source of possible failure.

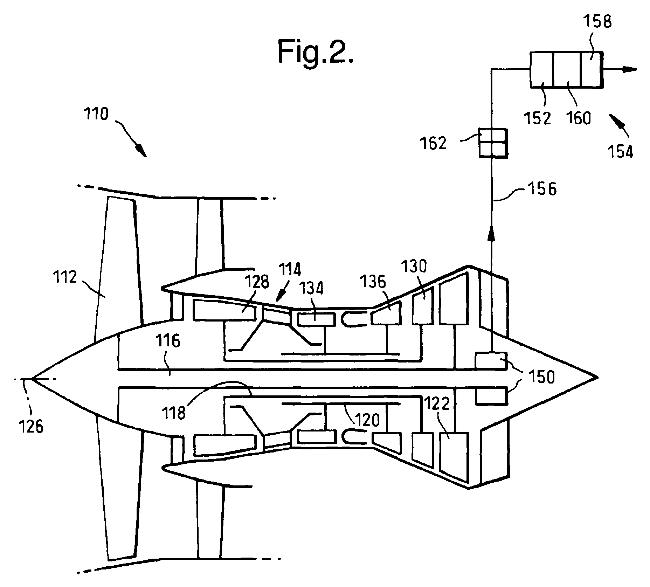

Fig. 2 shows a gas turbine engine which embodies the present invention. This engine 110 is shown schematically but corresponds in many respects with the engine 10 of Fig. 1. However, it is to be understood that the invention is not limited in its application to the particular type of engine shown in Fig. 1. In particular, the invention can be applied to engines with one, two or more shafts, as will become apparent.

For simplicity and clarity of description, features of the engine 110 which correspond with features described in relation to the engine 10 are identified by the same reference numeral, prefixed '1'. Thus, the high pressure compressor is identified by the numeral 34 in Fig. 1 and the numeral 134 in Fig. 2.

In accordance with the invention, the engine 110 is additionally provided with an electrical generator 150, driven by the low pressure shaft 116. An electrical motor 152 is driven by power generated by the generator 150, as will be described, and is operable to drive a system illustrated generally at 154 which is shown in this example as being external to the engine. The generator 150 and the motor 152 are connected, in use, by an uninterrupted electrical conductor arrangement 156. The term 'uninterrupted' is used to indicate that the electrical output of the generator 150 is applied directly to the motor 152 without passing through power electronics, control circuitry, switch gear or the like, and preferably without fuses. The advantages of this arrangement will become apparent from the following description.

The generator 150 is, in this example, a permanent magnet generator comprising a ring of permanent magnets rotatable relative to a ring of windings so that the generator 150 generates power whenever the shaft 116 is turning. Radial flux or transverse flux generator arrangements could be used. The generator 150 may have windings arranged to provide a multi-phase output and preferably has at least two independent winding arrangements to introduce some redundancy into the arrangement for safety reasons, and to allow load shedding in conventional manner. Alternatively, the generator may be a switched reluctance generator or an induction coil generator.

The motor 152 may comprise a permanent magnet motor or an induction motor. Thus, a ring of windings powered by power from the generator 150 are rotatable relative to a ring of permanent magnets or energized windings in order to create motor rotation. The motor 152 is preferably configured for multiple phase operation (with the same number of phases as are generated by the generator 150) and to have at least two independent winding arrangements, for redundancy and load shedding, as described above.

In the preferred arrangement, for each distinct winding circuit in the generator 150, there will be a corresponding distinct winding circuit within the motor 152. Consequently, the conductor 156 has a like multiplicity of distinct conductors, each providing an independent direct electrical connection between corresponding winding circuits of the generator 150 and of the motor 152. The conductor 156 may be embodied as a multi-core cable of appropriate rating.

The generator 150 and motor 152 incorporate arrangements (known in themselves) by which the number of poles operating within the generator 150 and/or within the motor 152 can be changed, such as a contactor or similar apparatus. Changing the number of poles being used allows the ratio of speeds of the generator 150 and the motor 152 to be varied.

In the example illustrated in Fig. 2, the motor 152 is shown driving a hydraulic pump 158 by means of a gearbox 160. The pump 158 is used to power hydraulic systems of the aircraft upon which the engine 110 is operationally mounted.

When the engine 110 is in use, fuel combustion will produce thrust in the conventional manner, and will also cause the shafts 16,18,20 to turn, thus turning the generator 150. The power thus generated is conveyed by the conductor 156 to the motor 152 and thus to the pump 158 and associated hydraulic system. It is important to note that the uninterrupted electrical connections between the windings of the generator 150 and the windings of the motor 152 will cause the motor 152 to change speed with the generator 150, the speeds remaining in fixed ratios unless the number of active poles of one or other unit, or both, is changed, as described above. The hydraulic power available to the aircraft will therefore vary with the engine speed (again subject to changes in pole numbers). This advantageously allows a match to be achieved between the power available and the power required by the aircraft, without the intervention of control arrangements such as power electronics, which would introduce further weight and a further possible source of failure. Thus, when hydraulic power demands are at their highest, such as when landing gear is being raised immediately after take-off, the engines will at that stage be delivering maximum thrust and maximum shaft rotation speed, and the generator 150 will therefore be producing power at the maximum rate. During normal flight, engine shaft speed will usually reduce, which reduces the power available to the motor 152 from the generator 150, but hydraulic power requirements will normally also have reduced.

The conductor 156 will be conveying alternating current at a frequency which varies according to engine speed and will thus require shielding against radio frequency interference (RFI) across a range of frequencies, to avoid interference with other electrical systems on the aircraft.

It is envisaged that in practice, some slippage may occur as the motor 152 seeks to turn with the generator 150, particularly when high torque output is required of the motor 152. However, these slippage characteristics are expected to be adequately predictable and manageable.

It can readily be seen from Fig. 2 that the power taken off the engine 110 to drive the pump 158, and thus to provide hydraulic power to the aircraft, is conveyed from the engine 110 solely by means of the conductor 156. Consequently, the pump 158 is not restricted to being within the engine 110 and can in principle be anywhere on the aircraft if an adequate length of conductor 156 can be routed through the aircraft to maintain the uninterrupted electrical connection from the generator 150 to the motor 152. The engine is required to carry the generator 150 and to accommodate the conductor 156, but these arrangements are relatively very simple in comparison with the mechanical arrangements of the shafts and gearboxes 40,42,44 shown in Fig. 1, with their consequent requirements for lubrication, cooling and the like. Moreover, the engine 110 can readily be removed from the aircraft by disconnecting the conductor 156 at an appropriate electrical connector 162. By contrast, removal of the engine 10, when the accessory gearbox 44 is driving a hydraulic system, would require the hydraulic system to be broken in such a manner that air could not leak in upon re-connection, nor hydraulic fluid be lost. All of these requirements impose additional complexity on the engine 10, and increase engine weight.

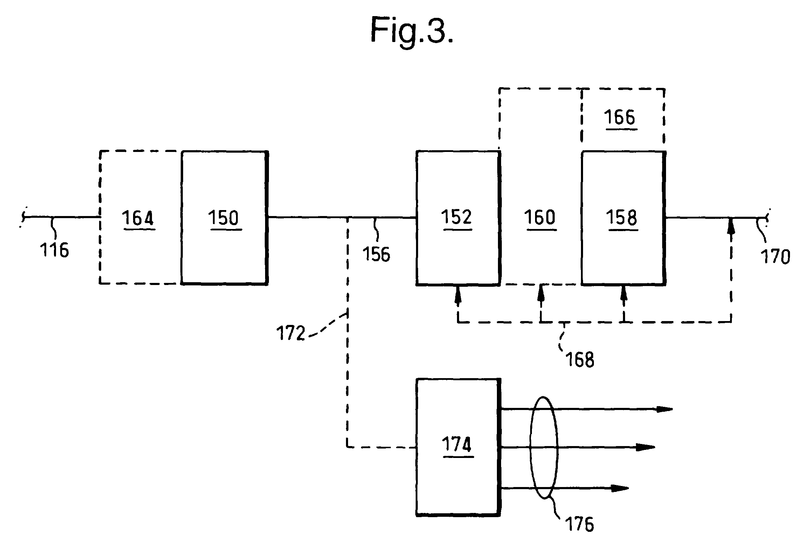

The remaining drawings help illustrate how the benefits of the invention can be realised in very many different arrangements. Turning first to Fig. 3, there is shown a generic block diagram of various alternatives to be described below. In Fig. 3, items shown in bold lines will be present in all the arrangements to be described, whereas elements shown in broken lines are optional in various combinations. Thus, the generator 150, which will be within the engine 110, is shown being driven from the low pressure shaft 116, through an optional gearbox 164, if required. The conductor 156 delivers the output of the generator 150 to the motor 152, which in turn drives the pump 158 through an optional gearbox 160 which may also drive an optional additional pump 166. If desired, a control system 168 may sense parameters such as motor speed, motor load, pump speed and hydraulic pressure in the hydraulic system 170, allowing the gearboxes 160,164 and the poles of the generator and motor to be controlled as required. In addition to the connection from the generator 150 to the motor 152, the conductor 156 may be tapped optionally at 172 to provide an electrical power take-off to the aircraft electrical systems. This alternating current would normally be passed first to a conditioning circuit 174 acting as a power supply to provide stable DC and/or AC power to one or more buses 176 used to distribute the power around the aircraft.

The gearboxes, if present, may be single speed, multiple speed or variable speed gearboxes.

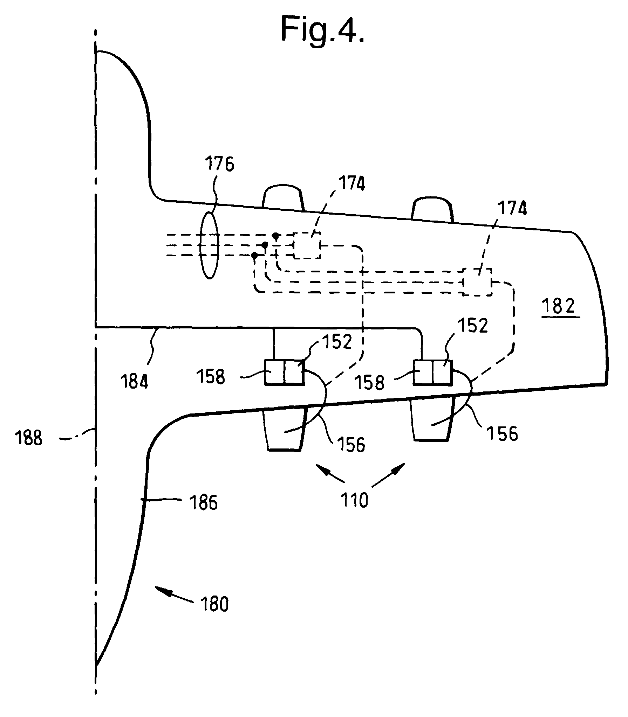

Some options for implementing these arrangements in aircraft are shown in more detail in the remaining drawings. Fig. 4 shows part of an aircraft 180, including a wing 182 which carries two gas turbine engines 110. These are shown highly schematically in outline only. Two motors 152, with associated pumps 158 are shown schematically in Fig. 4, and are mounted in the wing 182, one above each engine 110. Each motor 152 is powered through a conductor 156 routed appropriately from the generator within the associated engine 110. Each pump 158 provides hydraulic pressure to a hydraulic circuit leg 184 which extends out from the body 186 of the aircraft, along the wing 182. Within the body 186, the leg 184 connects with the main hydraulic circuit 188 of the aircraft. In this arrangement, the hydraulics of the aircraft 180 are contained almost wholly within the body 186, there being only the leg 184 extending from the body 186 along the wing 182. No hydraulic connection is necessary from the leg 184 into the engines 110, because power is taken off by means of the conductors 156. Consequently, the hydraulic arrangements are contained wholly within the aircraft, rather than forming any part of the engine, simplifying engine removal and replacement by avoiding the need for hydraulic connectors of the type conventionally required to provide hydraulic connections to an engine of the type shown in Fig. 1. Hydraulic contamination of engine fluid circuits is also prevented.

In the arrangement of Fig. 4, one or both conductors 156 can optionally be tapped to provide electrical power to the aircraft systems.

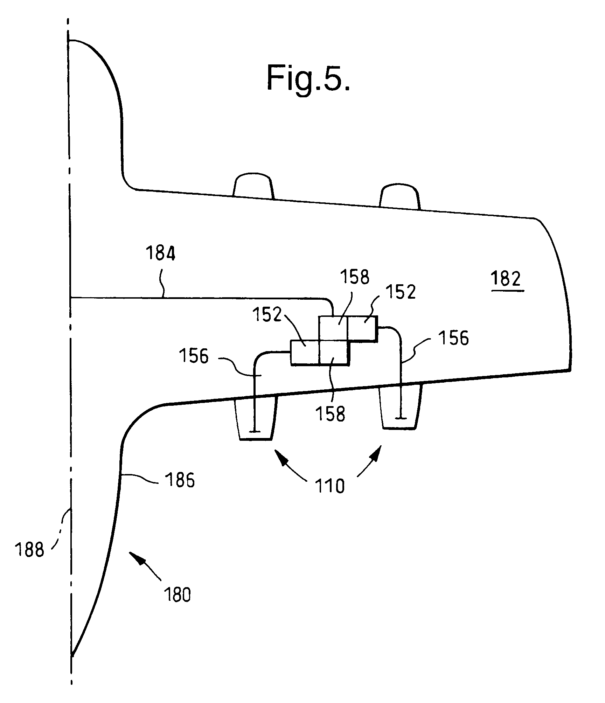

Fig. 5 illustrates a further alternative arrangement embodying the invention. In this example, the aircraft 180 again has a wing 182 carrying two gas turbine engines 110. Each engine 110 includes a conductor 156 to convey power from a generator within the engine to a respective motor 152 located within the wing 182 and driving a respective pump 158. In this example, the two pumps 158 are at a common location, both providing hydraulic pressure into end one of the hydraulic leg 184 which then extends away down the wing 182 to connect with the main hydraulic circuit 188 within the body 186 of the aircraft 180. It is envisaged that locating the pumps 158 at a common location may simplify the hydraulic arrangements required. The use of a common location is possible because the conductors 156 can be made of appropriate length to maintain the connection between the generators and motors. For the same reason, the choice of the common location for the pumps 158 could be varied widely within the wing (or elsewhere in the aircraft), according to constraints such as the location of fuel tanks or other equipment, or other aircraft requirements.

In the arrangement of Fig. 5, one or both conductors 156 can optionally be tapped to provide electrical power to aircraft systems.

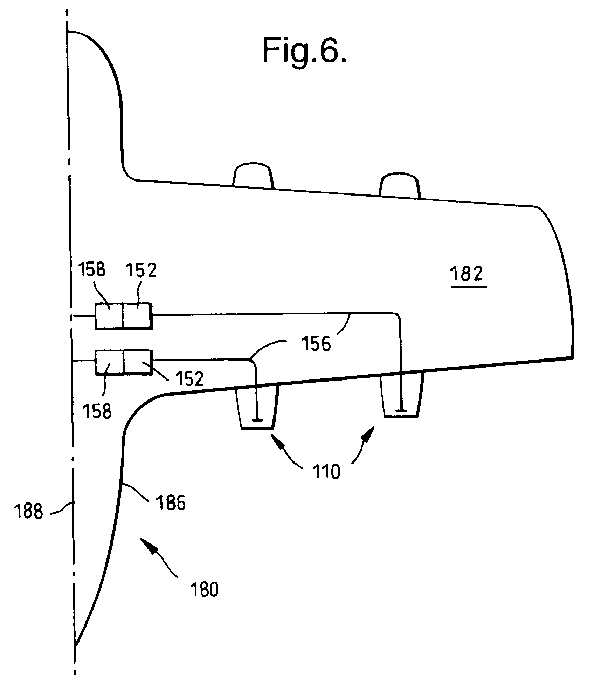

In the arrangement of Fig. 6, the aircraft 180 again has a wing 182 which carries two gas turbine engines 110 each of which has a motor 152 connected to a generator 150 by a conductor 156. In this arrangement, the common location of the pumps 158 is at the root of the wing 182, or within the body 186, to provide hydraulic pressure directly to the main hydraulic circuit 188 within the body 186. Only the conductors 156 are required to extend along the wing 182. The wing is therefore 'dry', in that no hydraulics are required within the wing itself. It is expected to be relatively easy to find an acceptable route for the conductors 156 through the wing (subject, in particular, to RFI constraints) in comparison with the complexity of routing hydraulic lines.

In the arrangement of Fig. 6, one or both conductors 156 can optionally be tapped to provide electrical power to aircraft systems.

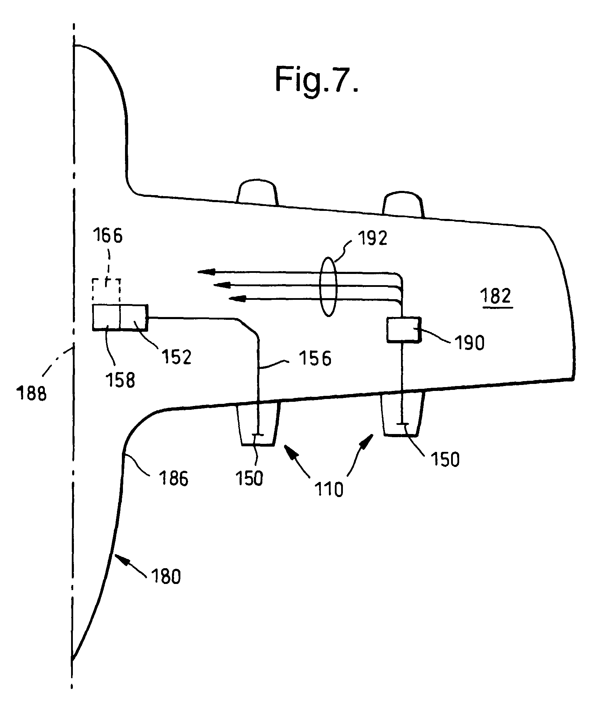

Fig. 7 shows an alternative arrangement. In this example, the aircraft 180 has a wing 182 carrying two gas turbine engines 110. One engine 110 has a motor 152 providing power to the hydraulic circuit 188. The motor 152 is located within the aircraft body 186, connected to the generator 150 by a conductor 156 extending along the wing 182. Again, this keeps the wing 'dry'. The other engine is shown in this example as providing electrical power, rather than hydraulic power. This is achieved by conditioning electronics at 190 which condition the output of the generator 150 to produce appropriate electrical outputs at 192, at various AC and/or DC voltage levels. It will be readily apparent that instead of using one engine for hydraulic power and one for electrical power, as shown, it would be possible for one or both engines to provide both functions by tapping electrical power from the conductor 156 to be conditioned to provide electrical outputs. A tapped output also allows the full benefits of the invention to be realised when only one engine is fitted to the wing 182.

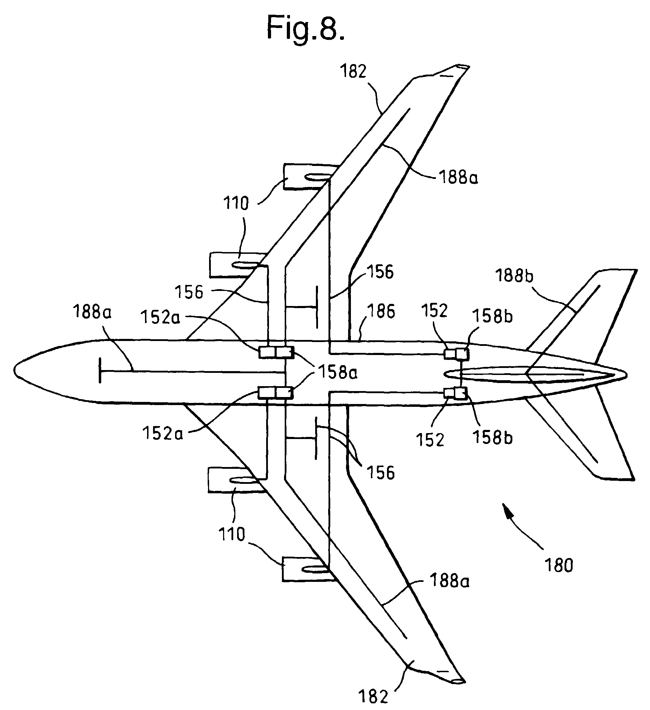

Fig 8 shows a yet further arrangement. This is similar to the arrangement of Fig 6 with the aircraft again having a wing 182 which carries two gas turbine engines 110 each of which has a generator 150 connected to a remote motor 152. The motor 152 drives pumps 158 to provide hydraulic pressure. In this arrangement however the hydraulic circuit 188 is split into first 188a and second 188b circuits. The first circuit 188a extends about, around and supplies a first part of the aircraft 180 where hydraulic power is required. In this case around the wings 182, centre path and forward of the aircraft body 186 to supply for example the flap actuation and landing gear. The second circuit 188b, which is independent of the first circuit 188a, extends around and supplies a second part of the aircraft 180 where hydraulic power is required. In this case around the tail of the aircraft 180 and rudder. The hydraulic pumps 156a which provide hydraulic pressure for the first circuit 188a are located at the wing root 182 or with the body 186 as in the Fig 6 arrangement. Separate hydraulic pumps 156b however are provided and located in the tail of the aircraft 180 to provide hydraulic pressure to the second hydraulic circuit 188b. Accordingly only conductors 156 are required to extend along the length of the aircraft to the tail. It is expected to be easier to route the conductors along the aircraft body in comparison with the complexity of routing a hydraulic line and the conductor will be lighter than an extended hydraulic line extending along the length of the aircraft to the tail. Although the hydraulic circuit 188 has only been shown as being split into two circuits 188a, 188b, it will be appreciated that it could be split into further separate circuits each of which is provided with a pump 158 and motor 152 connected directly to a generator 150 via a conductor.

It is apparent from the above description that the invention provides a range of benefits of reduced weight and complexity, particularly by removing mechanical linkages, gearboxes, hydraulic pumps and the like from the engine (c.f. Fig. 1). These changes generate further consequential benefits. The removal of hydraulic components from the engine reduces the complexity of connections required to the engine, as has been described, with additional weight savings. Protective structures within the wing to protect the hydraulic circuit between the engine and the fuselage are no longer required. Apparatus within the wing, such as ailerons, flaps, air brakes and the like, which are conventionally powered hydraulically, can be powered electrically by tapping the conductors 156, as has been described, resulting in additional weight savings in these components. It is envisaged that once all these consequential weight savings have been achieved, a significant increase in payload or fuel load (and hence range) can result. Furthermore, reliability is improved, because the hydraulic circuits no longer need be exposed to the hostile environment of the engine, nor does the removal of an engine require the hydraulic circuit to be broken.

It is also apparent from the above that the generator will continue to generate power even in the event of a failure of the engine, because the generator will be turned by the air flow through the engine, as the engine 'windmills'. When the generator is driven by the low pressure shaft, as described, the generator can provide sufficient emergency power to avoid the need for ram turbines normally provided solely for emergency use. Dispensing with the ram turbines provides an additional weight saving, and improves reliability during emergencies, since correct operation of the arrangements of the invention can be monitored during normal flight.

Many variations and alterations could be described to the apparatus described above, without departing from the scope of the present invention. The generator is described as a permanent magnet generator, but the use of a switched reluctance generator or an induction coil generator is envisaged. In particular, while the arrangement described above is readily achieved by modification of a conventional engine, the generator could be located elsewhere within the engine, and be driven by any of the engine shafts, and more than one generator could be provided, for instance being driven by respective shafts of the engine. The arrangement has been described primarily as driving a motor to provide hydraulic power, but the motor could also be used to drive an alternator for electrical power, or a compressor for pneumatic power. The power from the generator could also be re-applied within the engine, for instance to apply power to another one of the shafts, allowing power distribution among the shafts within the engine. It is envisaged that the generator could be configured in a manner to allow its use also as a motor, with appropriate connections being provided to allow power from an external source to be applied to the generator (operating as a motor) when the engine is being started. The examples in Figs. 4 to 8 all show two engines attached to an aircraft wing, but the invention can be applied when a different number of engines is present, or they are located elsewhere.

The description set out above has been related solely to gas turbine engines used for aircraft but the benefits of the invention can be applied to gas turbine engines used for other purposes, such as for power generation, with static engines, in ships or in other vehicles.

The arrangements described above all include a generator driven directly from a shaft of the engine. Alternatively, the generator could be driven indirectly from the shaft. For instance, the generator could be driven by the gearbox found conventionally in a gas turbine engine, the gearbox being driven in turn by a mechanical drive from a engine shaft. In that case, the gearbox would drive only the generator, with the electrical output of the generator being conveyed away from the engine by an uninterrupted electrical connection to a motor located remotely from the engine. This would achieve all the direct and consequential advantages of removing the hydraulic circuits from the engine, including the possibility of a 'dry' wing, but would not achieve the advantages which would follow from the removal from the engine of the mechanical drive, gearbox and the like. However, this alternative illustrates that the generator can be located on, within, around or offset from the driving shaft, while still obtaining the benefits of the invention.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A gas turbine engine (110) arrangement comprising at least one driven shaft (116,118,120) within the engine (110), electrical generator means (150) driven by the said shaft (116,118,120), which in use generates electrical power, and electrical motor means (152) driven by the electrical power generated by the generator means (150), the motor means (152) being located remotely from the generator means (150);
characterised in that the generator means (150) and the motor means (152) are connected, in use, by uninterrupted electrical conductor means (156) and that the motor means (152) are operable to provide power to a hydraulic system (170).

2. An engine arrangement according to claim 1, wherein the uninterrupted electrical conductor means (156) provide a direct electrical connection between windings of the generator means (150) and of the motor means (152).

3. An engine arrangement according to claim 1 or 2, wherein the generator means (150) comprise a permanent magnet generator.

4. An engine arrangement according to claim 1, 2 or 3, wherein the generator means (150) comprise a switched reluctance generator.

5. An engine arrangement according to any preceding claim, wherein the generator means (150) comprise an induction coil generator.

6. An engine arrangement according to any preceding claim, wherein the motor means (152) comprise a permanent magnet motor.

7. An engine arrangement according to any preceding claim, wherein the motor means (152) comprise an induction motor.

8. An engine arrangement according to any of claims 3 to 7, further comprising a control arrangement operable to change the number of poles operating within the motor means (152) and/or the generator means (150) whereby the ratio of speeds of the motor means (152) and the generator means (150) can be varied.

9. An engine arrangement according to any of claims 3 to 8, wherein the motor means (152) and/or the generator means (150) comprise multiple independent windings.

10. An engine arrangement according to claim 9, wherein the motor means (152) and the generator means (150) each comprise a like multiplicity of independent windings, the electrical conductor means (156) providing a like multiplicity of independent uninterrupted electrical connections between corresponding windings of the generator means (150) and of the motor means (152).

11. An engine arrangement according to any preceding claim, wherein the generator means (150) is driven directly from the engine shaft (116,118,120).

12. An engine arrangement according to any preceding claim, wherein the engine (110) is a multiple shaft engine (110).

13. An engine arrangement according to claim 12, wherein the engine (110) is a three shaft engine comprising a high pressure shaft (120), an intermediate pressure shaft (118), and a low pressure shaft (116).

14. An engine arrangement according to claim 13, wherein the generator means (150) is driven by the low pressure shaft (116).

15. An engine arrangement according to claim 13, wherein the generator means (150) is driven by the intermediate pressure shaft (118).

16. An engine arrangement according to any preceding claim, wherein the motor means (152) is operable to drive a hydraulic pump (158) within the hydraulic system (170).

17. An engine arrangement according to any preceding claim, wherein a gearbox (164) is provided between the engine shaft (116) and the generator means (150).

18. An engine arrangement according to any preceding claim, wherein a gearbox (160) is provided between the motor means (152) and a hydraulic pump (158) is driven by the motor means (152) via the gearbox (164) to provide power to the hydraulic system (170).

19. An engine arrangement according to claim 17 or 18, wherein the gearbox (160,164) is a multiple speed gearbox.

20. An engine arrangement according to claim 17 or 18, wherein the gearbox (160,164) is a variable speed gearbox.

21. An engine arrangement according to any preceding claim, wherein the generator means (150), in use, further provides electrical power to at least one electrical system.

22. An engine arrangement according to any preceding claim, wherein the generator means (150) is provided with power connections by means of which the generator means (150) is driveable as a motor operable to start the engine (110).

23. An engine arrangement according to any preceding claim, wherein the motor means (152) is located remotely from the engine (110).

24. An engine arrangement according to any preceding claim, wherein the motor means (152) is arranged to drive a hydraulic system (170) external to the engine (110).

25. An aircraft (180) comprising a first wing (182), a second wing (182), a fuselage (186), and a plurality of engines (110) as claimed in any preceding claim, the engines (110) are mounted upon said first and second wings (182) and there are a plurality of hydraulic pumps (158), wherein the motor means (152) of each engine (110) provides power to an individual hydraulic pump (158) of the plurality of hydraulic pumps (158).

26. An aircraft as claimed in claim 25 comprising a common connecting hydraulic circuit leg (184) which is common to and connects the plurality of hydraulic pumps (158).

27. An aircraft as claimed in claim 25 or 26 wherein the motor means (152) of the plurality of engines (110) are operable to drive hydraulic pump means (158) at a common location.

28. An aircraft as claimed in any one of claims 25 to 27 in which the individual motor means (152) of the plurality of engines (110) comprise a single motor means (118) which is driven by electrical power generated by the individual generator means (156) of the plurality of engines (110).

29. An aircraft according to any one of claims 25 to 28 wherein the motor means (152) are located within the fuselage (186).

30. An aircraft according to claim 28, wherein the hydraulic pump means (158) provides power, in use, to a hydraulic circuit (188) which includes a circuit leg within the fuselage and a circuit leg (184) connecting the hydraulic pump (158) with the hydraulic circuit (188) within the fuselage.

31. An aircraft according to claim 29, wherein the motor means is operable to drive hydraulic pump means located within the aircraft fuselage to provide power to a hydraulic circuit which is wholly contained within the fuselage.

32. An aircraft according to any preceding claim, wherein the generator means is operable to provide electrical power for systems within the wing and external to the engine.

33. An aircraft according to any one of claims 25 to 32, wherein at least one engine has motor means located within the aircraft, there being at least one other engine which provides electrical power for aircraft systems.

34. An aircraft according to claim 33, wherein the said other engine is operable to provide electrical power to power conditioning means which condition the power to supply at least one electrical distribution bus.

35. An aircraft according to claim 34, wherein the power conditioning means is located within the wing or pylon.

36. An aircraft according to any one of claims 25 to 35 wherein the aircraft (180) incorporates a hydraulic circuit (188) which comprises at least two separate hydraulic circuits (188a,188b) located in an supplying different parts of the aircraft (180), the plurality of motor means (152) and hydraulic pumps (158) arranged such that each of the at least two circuits (188a), 188b) includes a hydraulic pump (158a,158b) and motor means (152a,152b), the hydraulic pump (158a) and motor means (152a) of a first circuit (188a) are located in part of the aircraft (180) corresponding to the first hydraulic circuit (188a) whilst the hydraulic pump (158b) and motor means (152b) of a second hydraulic circuit (188b) are located in a part of the aircraft (180) corresponding to the second hydraulic circuit (188b), the electrical conductor means (156) connecting the generator means (150) of the engines (110) to the motor means (152a,152b) extending around the aircraft (180) to the motor means (152a,152b) located in the different parts of the aircraft (180).

37. An aircraft according to claim 26 wherein the second circuit (188b) is located in and supplies the tail part of the aircraft (180).
